# EUROPÄISCHE PATENTANMELDUNG

(11) **EP 2 777 988 A1**
(43) Veröffentlichungstag der Anmeldung: **17.09.2014**
(21) Anmeldenummer: 13159221.4
(22) Anmeldetag: 14.03.2013
(51) Int. Cl.: B60Q 3/02, B60Q 3/00, B60Q 1/00, F21Y 105/00

(54) **Leuchtvorrichtung mit transluzenter Leuchtscheibe**

(71) Anmelder: Flextronics Automotive GmbH & Co. KG, 72636 Frickenhausen (DE)
(72) Erfinder: Dr. Wimbert, Frank, 73277 Owen (DE)
(74) Vertreter: Kohler Schmid Möbus

(57) **Zusammenfassung**

Die Erfindung betrifft eine Leuchtvorrichtung (1') mit mindestens einer ersten Lichtquelle (2), und einer transluzenten Leuchtscheibe (4), von der Licht mindestens einer weiteren Lichtquelle (3) ausgeht, wobei die erste Lichtquelle (2) und die Leuchtscheibe (4) so zueinander angeordnet sind, dass, das von der ersten Lichtquelle (2) emittierte Licht in Richtung der Leuchtscheibe (4) abgestrahlt wird. Somit werden neue interessante Designeffekte ermöglicht.

## Beschreibung

Die vorliegende Erfindung betrifft eine Leuchtvorrichtung, insbesondere für den Automotivbereich, mit mindestens einer ersten Lichtquelle.

### Hintergrund der Erfindung

Bei bekannten Leuchtvorrichtungen im Automobilbereich, z.B. Frontscheinwerfer, Rückleuchten, Innenbeleuchtung, ist das dazugehörende Gehäuse entweder mit einer transparenten Abdeckscheibe versehen, durch die hindurch das Leuchtmittel für den Betrachter sichtbar ist oder mit einer strukturierten Streuscheibe, welche die Lichtverteilung des von dem hinter der Streuscheibe angeordneten Leuchtmittel ausgehenden Lichts beeinflusst.

Beide Varianten sind jedoch oftmals designschwach und bieten nur wenige Möglichkeiten für gestalterische Varianten.

### Aufgabe der Erfindung

Es ist daher Aufgabe der vorliegenden Erfindung, eine Leuchtvorrichtung bereitzustellen, die neue interessante Designeffekte ermöglicht.

### Kurze Beschreibung der Erfindung

Diese Aufgabe wird erfindungsgemäß durch die Merkmale des Patentanspruchs 1 gelöst. Vorteilhafte Ausgestaltungen der Erfindung sind Gegenstand der Unteransprüche.

Erfindungsgemäß ist eine transluzente Leuchtscheibe vorgesehen, von der Licht mindestens einer weiteren Lichtquelle ausgeht, wobei die erste Lichtquelle und die Leuchtscheibe so zueinander angeordnet sind, dass, das von der ersten Lichtquelle emittierte Licht im Wesentlichen in Richtung der Leuchtscheibe abgestrahlt wird.

Das Licht der ersten Lichtquelle wird also entlang einer Hauptausbreitungsrichtung abgestrahlt, die einen Winkel kleiner als 180° mit der Leuchtscheibe einschließt, wobei unter "Hauptausbreitungsrichtung", die Richtung zu verstehen ist, in die der größte Anteil des Lichts der ersten Lichtquelle abgestrahlt wird. Dies wird bei einer symmetrischen Lichtverteilung im Allgemeinen der Mittelstrahl sein. Lichtquellen weisen jedoch üblicherweise eine gewisse Divergenz auf, so dass in der Regel auch Anteile des Lichts vorhanden sind, die nicht in Richtung der Leuchtscheibe bzw. in einem anderen Winkel zur Leuchtscheibe abgestrahlt werden.

Die Leuchtscheibe selbst strahlt Licht aus, insbesondere senkrecht zur Scheibenoberfläche, und dient als Blickschutz (Lichtvorhang), der den Blick auf die hinter der Leuchtscheibe angeordnete erste Lichtquelle verhindert. Der optische Eindruck für den Betrachter wird daher durch die Leuchtscheibe dominiert. Gleichzeitig wird die Funktion der erste Lichtquelle nicht beeinträchtigt, da das Licht der ersten Lichtquelle im Wesentlichen in Richtung der Leuchtscheibe abgestrahlt wird, und somit ein großer Anteil des von der ersten Lichtquelle emittierten Lichts durch die Leuchtscheibe hindurchtreten kann.

Vorzugsweise wird von der Leuchtscheibe diffuses Licht abgegeben, so dass dem Beobachter von verschiedenen Winkeln aus die Sicht hinter die Leuchtscheibe verwehrt wird.

Die Intensität des von der Leuchtscheibe ausgehenden Lichts und des von der ersten Lichtquelle ausgehenden Lichts werden so gewählt, dass einerseits der Blick hinter die Leuchtscheibe verhindert wird und andererseits das von der ersten Lichtquelle durch die Leuchtscheibe tretende Licht in Hauptausbreitungsrichtung intensiver ist als das von der zweiten Lichtquelle.

Die Leuchtscheibe kann als ebene Platte oder aber auch gekrümmt ausgebildet sein.

### Bevorzugte Ausführungsformen

Die Leuchtscheibe kann auch als Blickfang dienen, ohne die eigentliche Funktion der Leuchtvorrichtung Preis zu geben. Dazu ist es besonders vorteilhaft, wenn die mindestens eine weitere Lichtquelle eine organische Leuchtdiode (OLED) ist, die auf der Leuchtscheibe angebracht oder in der Leuchtscheibe integriert ist. Die Leuchtscheibe kann in diesem Fall auch als Folie ausgebildet sein. Durch OLEDs können vielfältige Farb- und Mustervarianten realisiert werden.

Alternativ hierzu ist es jedoch auch denkbar, dass die Leuchtscheibe als Diffusorplatte ausgebildet ist, wobei die Diffusorplatte zumindest eine seitliche Kante aufweist, durch die von der weiteren Lichtquelle ausgehendes Licht eingekoppelt wird. Derartige seitlich durchleuchtete Diffusorplatten sind als Endlighten bekannt. Sie sind vorzugsweise aus diffus streuendem Material gefertigt, z.B. aus transluzenten, insbesondere transparentem Acrylglas (PMMA) gefertigt. Über eine oder mehrere Kanten wird Licht vorzugsweise parallel zur Scheibenoberfläche eingekoppelt.

Die Diffusorplatte dient als Lichtleiter, wobei vorzugweise an jeder Stelle der Diffusorplatte Lichts anteilig ausgekoppelt wird, so dass eine gleichmäßige Lichtverteilung über die ganze Fläche der Diffusorplatte erzeugt wird. Da der Weg der ersten Lichtquelle durch das Material der Diffusorplatte wesentlich kleiner ist als der Weg des Lichts der zweiten Lichtquelle, ist die Streuung des Lichts der ersten Lichtquelle vernachlässigbar, so dass das Licht der ersten Lichtquelle im Wesentlichen ungestört durch das Material der Diffusorplatte hindurchtritt.

Vorzugsweise ist die erste und/oder die mindestens eine weitere Lichtquelle eine LED. Aufgrund der kompakten Bauweise von LEDs ist ein direktes Einkoppeln der zweiten Lichtquelle in die Streuscheibe möglich.

Bei einer bevorzugten Ausführungsform ist die erste Lichtquelle in einem Gehäuse mit einer Öffnung angeordnet, wobei die Leuchtscheibe die Gehäuseöffnung verschließt. Die erste Lichtquelle befindet sich zwischen dem Gehäuse und der Leuchtscheibe. Das Gehäuse umfasst vorzugsweise eine Gehäuserückwand aus lichtundurchlässigem Kunststoffmaterial. Auf der Innenseite der Gehäuserückwand kann ein Reflektor angeordnet sein, um Licht, welches aufgrund der Divergenz der Lichtquelle in Richtung Gehäuserückwand ausgestrahlt wird, in Richtung Leuchtscheibe zu lenken, insbesondere zu fokussieren. Durch den Verschluss des Gehäuses durch die Leuchtscheibe wird die Lichtquelle vor äußeren Einflüssen geschützt. Alternativ hierzu kann die Leuchtscheibe auch als Zwischenlichtscheibe (also ohne Verschlussfunktion) ausgestaltet sein, die vorzugsweise innerhalb eines durch eine weitere Scheibe verschlossenen Gehäuses angeordnet ist.

Bei einer speziellen Ausführungsform der erfindungsgemäßen Leuchtvorrichtung ist die Leuchtvorrichtung Teil einer Dachbedieneinheit eines Fahrzeugs, bspw. eine in einem Fahrzeugdach integrierte Leselampe oder Innenbeleuchtung.

Eine andere Ausführungsform sieht vor, dass die Leuchtvorrichtung Teil einer Rückleuchte für ein Fahrzeug ist, wobei die erste Lichtquelle als Bremslicht dient. Die Schlusslichtfunktion wird durch die Leuchtscheibe (z.B. mit OLEDs) realisiert. Das Bremslicht kann mittels LEDs verwirklicht werden.

Es ist auch denkbar, dass die Leuchtvorrichtung Teil eines Scheinwerfermoduls für ein Fahrzeug ist.

Bei einer Weiterbildung dieser Ausführungsform dient die Leuchtscheibe als Tagfahr-oder Standlicht.

Eine andere Weiterbildung sieht vor, dass die Leuchtscheibe als zusätzliches Blinklicht dient.

Bei wiederum einer anderen Weiterbildung dient die erste Lichtquelle als Abblend-und/oder Fernlicht.

Alternativ hierzu kann die Leuchtvorrichtung auch als Ambientebeleuchtung dienen. Die Leuchtscheibe kann dann bspw. als Eyecatcher fungieren.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine erfindungsgemäße Leuchtvorrichtung mit seitlich durchleuchteter Diffusorplatte;
- Fig. 1b: eine erfindungsgemäße Leuchtvorrichtung mit seitlich durchleuchteter Diffusorplatte und Gehäuse;: und
- Fig. 2: eine erfindungsgemäße Leuchtvorrichtung mit einer mit OELDs bestückten Leuchtscheibe.

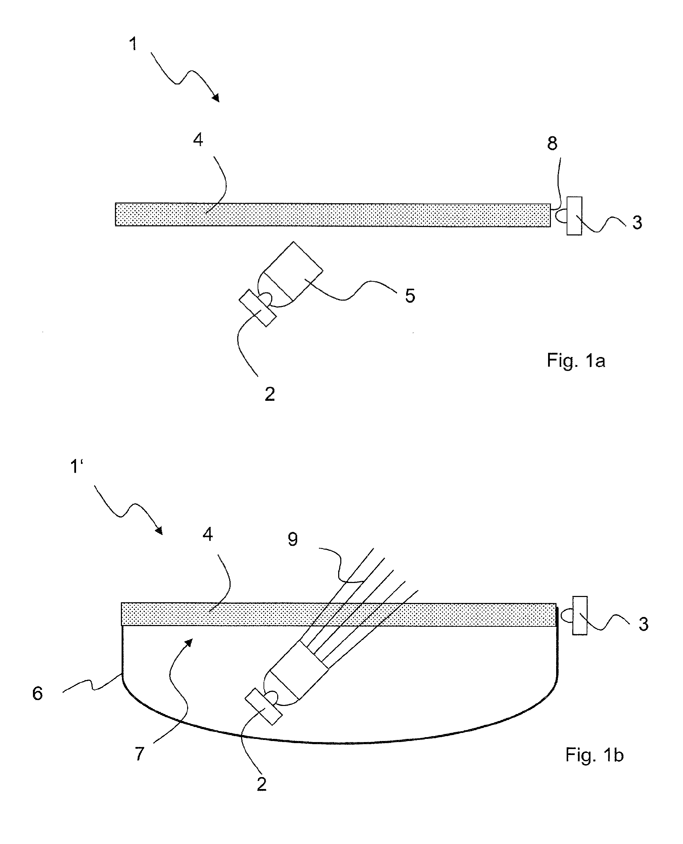

**Fig. 1a** zeigt eine erfindungsgemäße Leuchtvorrichtung **1** mit einer ersten Lichtquelle **2** und einer Leuchtscheibe, die als von einer weiteren Lichtquelle **3**, bspw. einer LED, seitlich durchleuchtete Diffusorplatte **4** ausgebildet ist. Die erste Lichtquelle 2 ist schräg zur Diffusorplatte 4 angeordnet und mit einer Fokussiereinrichtung **5** versehen, die das von der ersten Lichtquelle 2 ausgehende Licht in Richtung Diffusorplatte 4 bündelt. Die weitere Lichtquelle 3 ist so ausgerichtet, dass das von ihr ausgehende Licht im Wesentlichen entlang der flächigen Ausdehnung der Diffusorplatte 4 in die Diffusorplatte 4 eingekoppelt wird. Die Einkopplung erfolgt über eine Kante **8** der Diffusorplatte 4 entweder direkt oder über ein Zwischenelement, z.B. eine Lichtleiter (nicht gezeigt). Aufgrund des streuenden Materials, aus dem die Diffusorplatte 4 gefertigt ist, wird das eingekoppelte Licht **9** größtenteils in Richtung des Betrachters gestreut.

Im Gegensatz dazu schließt die Diffusorplatte 4 (zumindest in dem Bereich, in dem das Licht der ersten Lichtquelle 2 auf die Diffusorplatte 4 trifft) mit der Hauptausbreitungsrichtung des Lichts der ersten Lichtquelle 2 einen Winkel ungleich Null ein, so dass das von der ersten Lichtquelle 2 emittierte Licht nur geringfügig durch die Diffusorplatte 4 gestreut wird und nahezu ungestört durch die Diffusorplatte 4 dringen kann (s. Fig. 1b).

**Fig. 1b** zeigt eine erfindungsgemäße Leuchtvorrichtung **1'** mit einem Gehäuse **6**, das eine Öffnung 7 aufweist. Die erste Lichtquelle 2 ist innerhalb des Gehäuses **7** angeordnet. Die Diffusorplatte 4 verschließt die Öffnung 7 und dient somit gleichzeitig als Schutz vor äußeren Einflüssen. Es ist darüber hinaus auch möglich, auch die weitere Lichtquelle 3 innerhalb des Gehäuses 7 anzuordnen.

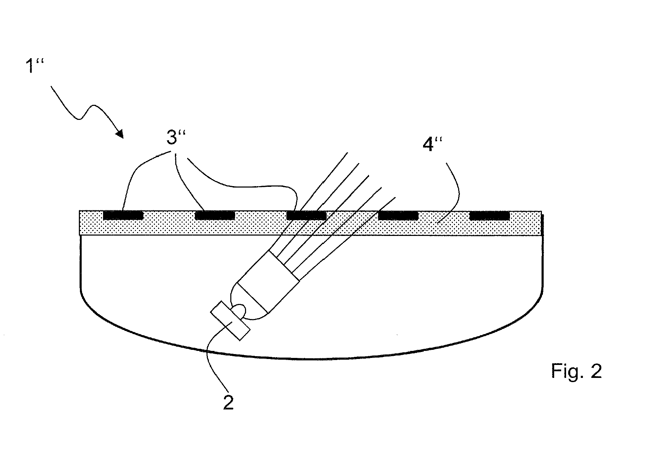

**Fig. 2** zeigt eine andere Ausführungsform der erfindungsgemäßen Leuchtvorrichtung **1"** mit einer Leuchtscheibe, die als eine mit weiteren Lichtquellen **3"** bestückte transparente Platte **4"** ausgebildet ist. Als weiteren Lichtquellen 3" kommen vorzugsweise OLEDs zum Einsatz. Es können verschieden farbige OLEDs vorgesehen sein, so dass der durch die Leuchtscheibe erzeugte "Lichtvorhang" verschieden farbig gestaltet werden kann, bspw. um als Eyecatcher zu dienen.

Durch die erfindungsgemäße Leuchtvorrichtung wird ein Blickschutz auf die mindestens eine erste Lichtquelle realisiert. Die erste Lichtquelle hat vorzugsweise eine Beleuchtungsfunktion inne. Es ist aber auch denkbar, durch die erste(n) Lichtquelle(n) ein Logo oder eine Designapplikation zu generieren, auf welche durch die davor angeordnete Leuchtscheibe aufmerksam gemacht werden soll (Eyecatcher). Eine weitere Anwendung können z.B. beleuchtete Symbole sein, deren Sichtbarkeit in der gewünschten Lichtfarbe durch die Leuchtscheibe gewährleistet wird. Die dahinter liegende erste Lichtquelle kann in diesem Falle die Funktionsrückmeldung in deutlich höherer Intensität und/oder anderer Lichtfarbe realisieren.

## Patentansprüche

1. Leuchtvorrichtung (1, 1', 1") mit
mindestens einer ersten Lichtquelle (2), und
einer transluzenten Leuchtscheibe (4, 4"), von der Licht mindestens einer weiteren Lichtquelle (3, 3") ausgeht,
wobei die erste Lichtquelle (2) und die Leuchtscheibe (4, 4") so zueinander angeordnet sind, dass, das von der ersten Lichtquelle (2) emittierte Licht in Richtung der Leuchtscheibe (4, 4") abgestrahlt wird.

2. Leuchtvorrichtung (1") nach Anspruch 1, **dadurch gekennzeichnet, dass** die mindestens eine weitere Lichtquelle (3") eine organische Leuchtdiode ist, die auf der Leuchtscheibe (4") angebracht oder in der Leuchtscheibe (4") integriert ist.

3. Leuchtvorrichtung (1, 1') nach Anspruch 1, **dadurch gekennzeichnet, dass** die Leuchtscheibe (4) als Diffusorplatte (4) ausgebildet ist, wobei die Diffusorplatte (4) zumindest eine seitliche Kante (8) aufweist, durch die von der weiteren Lichtquelle (3) ausgehendes Licht eingekoppelt wird.

4. Leuchtvorrichtung (1, 1') nach einem der Ansprüche 1 bis 3, **dadurch gekennzeichnet, dass** die erste Lichtquelle (2) und/oder die mindestens eine weitere Lichtquelle (3) eine LED ist.

5. Leuchtvorrichtung (1', 1") nach einem der Ansprüche 1 bis 4, **dadurch gekennzeichnet, dass** die erste Lichtquelle (2) in einem Gehäuse (6) mit einer Öffnung (7) angeordnet ist, wobei die Leuchtscheibe (4, 4") die Gehäuseöffnung (7) verschließt.

6. Leuchtvorrichtung (1, 1', 1") nach einem der Ansprüche 1 bis 5, **dadurch gekennzeichnet, dass** die Leuchtvorrichtung (1, 1', 1") Teil einer Dachbedieneinheit eines Fahrzeugs ist.

7. Leuchtvorrichtung (1, 1', 1") nach einem der Ansprüche 1 bis 5, **dadurch gekennzeichnet, dass** die Leuchtvorrichtung (1, 1', 1") Teil einer Rückleuchte für ein Fahrzeug ist, wobei die erste Lichtquelle (2) als Bremslicht dient.

8. Leuchtvorrichtung (1, 1', 1 ") nach einem der Ansprüche 1 bis 5, **dadurch gekennzeichnet, dass** die Leuchtvorrichtung (1, 1', 1") Teil eines Scheinwerfermoduls für ein Fahrzeug ist.

9. Leuchtvorrichtung (1, 1', 1") nach Anspruch 8, **dadurch gekennzeichnet, dass** die Leuchtscheibe (4, 4") als Tagfahr- oder Standlicht dient.

10. Leuchtvorrichtung (1, 1', 1") nach Anspruch 8, **dadurch gekennzeichnet, dass** die erste Lichtquelle (2) als zusätzliches Blinklicht dient.

11. Leuchtvorrichtung (1, 1', 1") nach Anspruch 8, **dadurch gekennzeichnet, dass** die erste Lichtquelle (2) als Abblend- und/oder Fernlicht dient.

12. Leuchtvorrichtung (1, 1', 1") nach einem der Ansprüche 1 bis 5, **dadurch gekennzeichnet, dass** die Leuchtvorrichtung (1, 1', 1") als Ambientebeleuchtung dient.
